# EUROPÄISCHE PATENTSCHRIFT

(11) **EP 0 707 809 B1**
(45) Veröffentlichungstag und Bekanntmachung des Hinweises auf die Patenterteilung: **14.11.2001**
(21) Anmeldenummer: 95116551.3
(22) Anmeldetag: 20.10.1995
(51) Int. Cl.: A47B 17/03

(54) **Arbeitstisch**
Work table
Table de travail

(30) Priorität: 20.10.1994 DE 9418403 U
(43) Veröffentlichungstag der Anmeldung: 24.04.1996
(73) Patentinhaber: SCHÜCO International KG, 33609 Bielefeld (DE)
(72) Erfinder: Diekmann, Bernd, Dipl.-Ing., D-33790 Hall/Westf. (DE)
(74) Vertreter: Stracke, Alexander, Dipl.-Ing.

(56) Entgegenhaltungen:
- EP-A- 0 096 373
- GB-A- 596 717

## Beschreibung

Die Erfindung betrifft einen Arbeitstisch mit einer großflächigen Tischplatte und einem Untergestell, welches vorzugsweise aus hinterschnittene Nuten aufweisende Profilstäbe gebildet ist.

Der in Frage kommende Arbeitstisch wird beispielsweise in industriellen Fertigungsabläufen, in Labors und Büros eingesetzt, wo ein ständiger Datentransfer erforderlich ist. Solche Arbeitsplätze sind mit Kommunikationsgeräten, mit Bildschirmen oder Personalcomputern ausgestattet. Diese Geräte werden entweder auf dem Arbeitstisch selbst plaziert oder es werden daran separate Auflagen fest angeordnet, auf denen diese Geräte dann abgestellt werden.

Es sind spezielle Computer-Arbeitsplatzmöbel bekannt, bei denen diese Auflagen höhenverstellbar sind, um den Bediener die Möglichkeit zu geben, den Bildschirm auf die richtige Augenhöhe einzustellen. Diese Geräte sind immer dann ausreichend, wenn die Sitzposition des Bedieners nicht verändert wird. Bei großflächigen Arbeitsplätzen bzw. Arbeitstischen wird jedoch an wechselnden Positionen gearbeitet. Es reicht dann die nicht veränderbare Position zumindest für den Bildschirm nicht mehr aus.

Der vorliegenden Erfindung liegt die Aufgabe zugrunde, einen Arbeitstisch der eingangs näher beschriebenen Art so auszubilden, daß von jeder Stelle aus eine optimale Bildschirmsicht ermöglicht wird, und zwar sowohl bei bogenförmig gestalteten als auch bei geraden Arbeitstischen.

Die gestellte Aufgabe wird durch eine seitlich am Arbeitstisch in vertikaler Position fest angeordnete Führungsschiene für einen Laufrollen aufweisenden Laufwagen und einen um eine Horizontalachse schwenkbaren Gerätetisch gelöst, der mittels einer Halteeinrichtung mit dem längs der Führungsschiene verfahrbaren Laufwagen gekoppelt ist. Durch die erfindungsgemäße Anordnung kann der zumindest den Bildschirm aufnehmende Gerätetisch längs der durch die Führungsschiene bestimmten Bahn entlang des Arbeitstisches verfahren werden. Dadurch kann er immer zu der Stelle wo gearbeitet wird, optimal ausgerichtet werden. Durch die Schwenkbarkeit kann dann außerdem noch die Neigung eingestellt werden. Die Verfahrbarkeit ist äußerst leichtgängig, bedingt durch den Laufwagen.

Da im Normalfall das Untergestell des Arbeitstisches aus Profilschienen gebildet ist, welche hinterschnittene Nuten aufweisen, ist in konstruktiv einfachster Weise vorgesehen, daß die Führungsschiene an der dem Arbeitstisch zugewandten Seite zur Verbindung mit dem Untergestell mit mindestens einer hinterschnittenen Nut versehen ist. Sie kann dann durch geeignete Verbinder mit dem Untergestell verbunden werden. Zur erhöhten Sicherheit ist es jedoch zweckmäßig, wenn die Führungsschiene mit zwei jeweils im oberen und unteren Bereich liegenden Nuten versehen ist. Zur einfachen Führung des Laufwagens ist vorgesehen, daß die Führungsschiene an der dem Arbeitstisch abgewandten Seite zwei parallel und im Abstand zueinander angeordnete, in Längsrichtung der Führungsschiene verlaufende Führungsstege für die Laufrollen des Laufwagens aufweist. Die Laufrollen können beispielsweise Wälzlager sein. Die Außenringe sind dann entsprechend dem Querschnitt der Führungsstege gestaltet, so daß sie formschlüssig geführt sind. Damit der Laufwagen nicht kippt oder sich vereckt, ist vorgesehen, daß er mit vier Laufrollen ausgerüstet ist, die ein Viereck beschreiben und an der der Führungsschiene zugewandten Seite eines Trägers gelagert sind. Es sind dann jedem Führungssteg zwei Laufrollen zugeordnet. In einfachster Weise besteht der Laufwagen im wesentlichen aus einem Abschnitt einer Profilschiene und den Laufrollen, wobei die Profilschiene zwei in Richtung zur Führungsschiene verspringende Bereiche aufweist, in denen die die Laufrollen tragenden Bolzen gelagert sind.

In konstruktiv einfacher Weise weist die Halteeinrichtung für den Gerätetisch zwei seitliche, parallel und im Abstand zueinander stehende Wangen auf, die in dem Laufwagen zugeordneten Bereich zur Lagerung des Gerätetisches mit zwei zueinander fluchtenden Bohrungen versehen sind. Die beiden Wangen können durch ein Verbindungsstück miteinander verbunden sein, welches an dem Laufwagen festgelegt ist. Der Gerätetisch mit zwei den Wangen der Halteeinrichtung funktionell zugeordneten Seitenteilen versehen ist, die mit zu den Bohrungen der Wangen des Halteteils korrespondierenden Lagerbohrungen versehen sind, daß zumindest ein Seitenteil mit einem bogenförmigen Langloch versehen ist, dessen Krümmungsmittelpunkt die Lagerbohrungen sind. Durch eine in eine Wange des Halteteils lagegerecht angeordnete Bohrung ist es möglich, unter Verwendung eines Klemmelementes den Gerätetisch in verschiedenen Winkellagen zu arretieren.

Anhand der beiliegenden Zeichnungen wird die Erfindung noch näher erläutert.

Es zeigen:
- Figur 1: Den erfindungsgemäßen Arbeitstisch im Aufriß und
- Figur 2: ein kreissegmentförmig ausgebildetes Untergestell eines Arbeitstisches in Draufsicht.

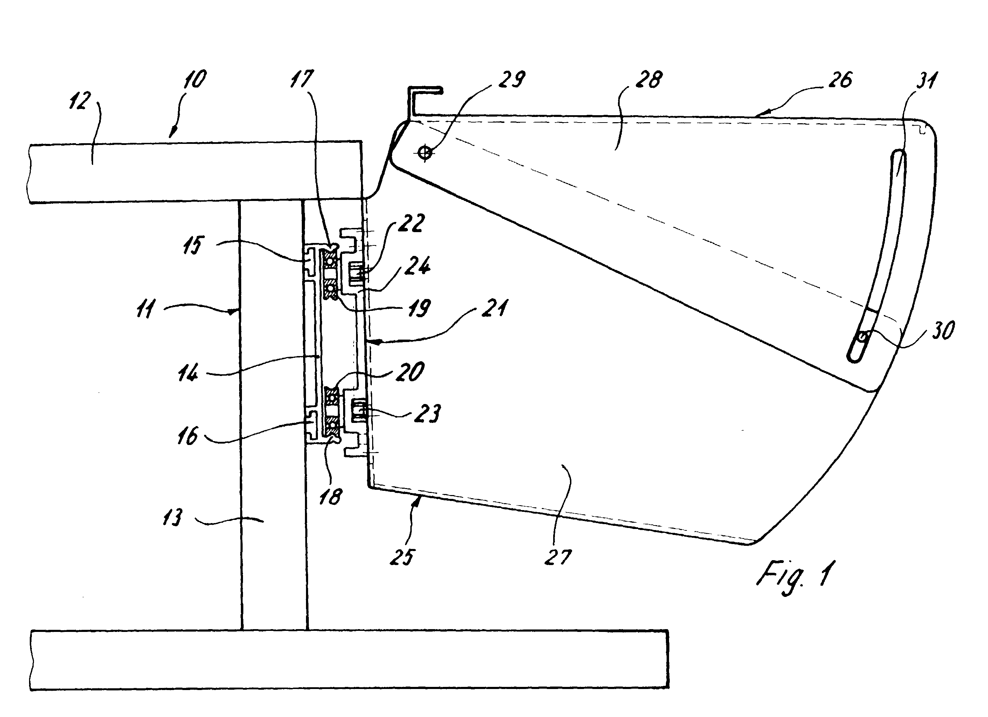

Der in der Figur 1 dargestellte Arbeitstisch 10 besteht aus einem nicht näher erläuterten Untergestell 11, auf dem eine Tischplatte 12 festgelegt ist. In nicht näher erläuterter Weise besteht das Untergestell aus Profilschienen, die hinterschnittene Nuten aufweisen, um weitere Bauteile daran festzulegen. Aus Darstellungsgründen ist der Arbeitstisch 10 nur teilweise dargestellt. Der Arbeitstisch 10 kann gerade ausgebildet sein oder aber bogenförmig verlaufen. An vertikal verlaufenden Tischbeinen 13 ist in nicht näher erläuterter Weise eine Führungsschiene 14 festgelegt, die der Kontur des Arbeitstisches 10 folgt. Diese Führungsschiene 14 hat an der dem Arbeitstisch 10 zugewandten Seite zwei parallel und im Abstand zueinander angeordnete hinterschnittene Nuten 15, 16, um sie an den Tischbeinen 13 mittels geeigneter Verbinder festzulegen. An der dem Arbeitstisch 10 abgewandten Seite ist sie im oberen und unteren Bereich mit zwei parallel und im Abstand zueinander verlaufenden Führungsstegen 17, 18 für die Laufrollen 19, 20 eines Laufwagens 21 versehen. Die Laufrollen 19, 20 bestehen aus Wälzlagern, deren Außenringe eine umlaufende, im Querschnitt dreieckförmige Nut aufweisen, in die die entsprechend gestalteten Führungsstege 17, 18 eingreifen. Der Laufwagen 21 ist insgesamt mit vier Laufrollen ausgerüstet, die paarweise angeordnet sind. Die Laufrollen sind auf Bolzen 22. 23 frei drehbar gelagert. Die Bolzen 22. 23 sind in eine Profilschiene 24 fest eingesetzt, die Teil des Laufwagens 21 ist. Die Länge des Laufwagens ist durch den Abstand der paarweise angeordneten Laufrollen 19 20 bestimmt. Die Länge der Profilschiene 24 richtet sich nach diesen Abständen. Die Bolzen 22, 23 sind in einen u-förmig in Richtung zur Führungsschiene 14 verspringenden Bereich der Profilschiene 24 gelagert. Der obere und untere Bereich der Profilschiene 24 ist entgegengesetzt u-förmig ausgebildet und mit Bohrungen versehen, um eine Halteeinrichtung 25 für einen Gerätetisch 26 festzulegen. Im dargestellten Ausführungsbeispiel besteht die Halteeinrichtung 25 aus zwei parallel und im Abstand zueinander verlaufende Wangen 27, die quer zu der Führungsschiene 14 bzw. zur Profilschiene 24 stehen. Der Gerätetisch 26 ist mit Seitenteilen 28 ausgerüstet, die ebenfalls quer zu der Führungsschiene 14 stehen. Diese Seitenteile liegen entweder innen oder außen an den Wangen 27 an oder sie stehen in einem geringen Abstand dazu. An der dem Arbeitstisch 10 zugewandten Seite sind die Wangen 27 und die Seitenteile 28 im oberen Bereich mit zueinander korrespondierenden Bohrungen versehen, damit der Gerätetisch 26 mittels einer horizontalen Achse 29 schwenkbar gelagert werden kann. Die Wangen 27 sind im gegenüberliegenden äußeren Bereich ebenfalls mit fluchtenden Bohrungen 30 versehen. Die Seitenteile 28 des Gerätetisches 26 sind mit je einem bogenförmig verlaufenden Langloch 31 ausgerüstet, deren Krümmungsmittelpunkte die die Achse 29 aufnehmenden Bohrungen sind. Dadurch läßt sich der Gerätetisch 26 von einer horizontalen Ebene in eine schräge Ebene absenken. Durch nicht dargestellte, in die Bohrungen 30 eingesetzte Klemmelemente kann der Tisch in jeder beliebigen Neigung arretiert werden.

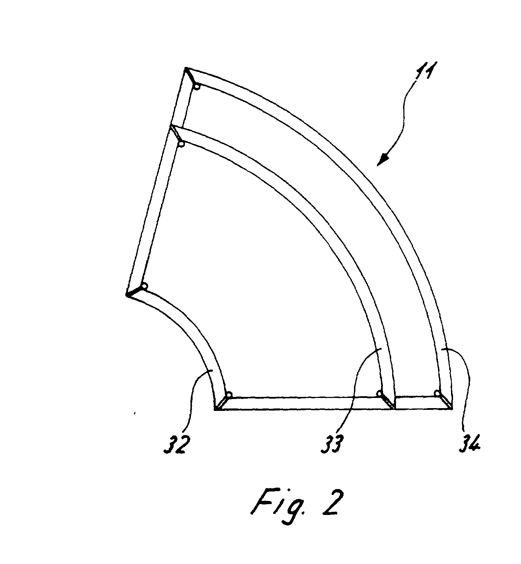

Die Figur 2 zeigt als eine mögliche Ausführung ein kreissegmentförmig ausgebildetes Untergestell 11. Die drei Schienen 32, 33, 34 haben einen gemeinsamen Krümmungsmittelpunkt. Es ergibt sich aus den Figuren 1 und 2, daß die Führungsschiene 14 und die Profilschiene 24 entsprechend gekrümmt sein müssen. Ferner ergibt sich, daß durch eine entsprechende Gestaltung der Führungsschiene 14 und der Laufrollen 19, 20 der Laufwagen 21 auch entlang einer gekrümmten Führungsschiene 14 verfahren werden kann.

## Patentansprüche

1. Arbeitstisch mit einer großflächigen Tischplatte und einem Untergestell, welches vorzugsweise aus hinterschnittene Nuten aufweisenden Profilstäben gebildet ist, **gekennzeichnet, durch** eine seitlich am Arbeitstisch (10) in vertikaler Position fest angeordnete Führungsschiene (14), für einen Laufrollen (19, 20) aufweisenden Laufwagen (21) und einen um eine Horizontalachse (29) schwenkbaren Gerätetisch (26), der mittels einer Halteeinrichtung mit dem längs der Führungsschiene (14) verfahrbaren Laufwagen (21) gekoppelt ist.

2. Arbeitstisch nach Anspruch 1, **dadurch gekennzeichnet, daß** die Führungsschiene (14) an der dem Arbeitstisch (10) zugewandten Seite zur Verbindung mit dem Untergestell (11) mit mindestens einer hinterschnittenen Nut (15) bzw. (16) versehen ist.

3. Arbeitstisch nach Anspruch 2, **dadurch gekennzeichnet, daß** die Führungsschiene mit zwei hinterschnittenen Nuten (15, 16) versehen ist, die im oberen und unteren Längskantenbereich der Führungsschiene (14) liegen.

4. Arbeitstisch nach Anspruch 1, **dadurch gekennzeichnet, daß** die Führungsschiene (14) an der dem Arbeitstisch (10) abgewandten Seite zwei parallel und im Abstand zueinander angeordnete, in Längsrichtung der Führungsschiene (14) verlaufende Führungsstege (17, 18) für die Laufrollen (19, 20) des Laufwagens 21 aufweist.

5. Arbeitstisch nach Anspruch 1, **dadurch gekennzeichnet, daß** der Laufwagen (21) mit vier Laufrollen (19, 20) ausgerüstet ist, die ein Viereck beschreiben und an der der Führungsschiene (14) zugewandten Seite eines Trägers gelagert sind.

6. Arbeitstisch nach Anspruch 1 und 5, **dadurch gekennzeichnet, daß** der Laufwagen (21) im wesentlichen aus einem Abschnitt einer Profilschiene (24) und den Laufrollen (19, 20) gebildet ist, und daß die Profilschiene (24) zwei in Richtung zur Führungsschiene (14) verspringende Bereiche aufweist, in denen die die Laufrollen (19, 20) tragenden Bolzen (22, 23) gelagert sind.

7. Arbeitstisch nach Anspruch 1, **dadurch gekennzeichnet, daß** die Halteeinrichtung (25) zwei seitliche, parallel und im Abstand zueinander stehende Wangen (27) aufweist, die in dem Laufwagen (21) zugeordneten, oberen Bereich zur Lagerung des Gerätetisches (26) mit zwei fluchtenden Bohrungen versehen sind.

8. Arbeitstisch nach Anspruch 7, **dadurch gekennzeichnet, daß** der Gerätetisch (26) mit zwei den Wangen (27) der Halteeinrichtung (25) zugeordneten Seitenteilen (28) versehen ist, die mit zu den Bohrungen der Wangen (27) korrespondierenden Lagerbohrungen versehen sind, daß zumindest ein Seitenteil (28) des Gerätetisches (26) im gegenüberliegenden Bereich mit einem bogenförmig verlaufenden Langloch (31) versehen ist, und daß die zugeordnete Wange (27) der Halteeinrichtung (25) mit einer lagegerechten Bohrung (30) versehen ist, in die ein den Gerätetisch (26) arretierendes Klemmelement einsetzbar ist.

## Claims

1. A work table with a large-surface table board and an underframe which is preferably formed of profiled rods having undercut grooves, **characterized by** a guide rail (14) which is fixedly arranged laterally on the work table (10) in a vertical position for a carriage (21) having rollers (19, 20) and an equipment table (26) which is swivelable about a horizontal axis (29) which is coupled by means of a holding device with the carriage (21) which can be moved along the guide rail (14).

2. A work table as claimed in claim 1, **characterized in that** the guide rail (14) is provided on the side facing the work table (10) with at least one undercut groove (15) or (16) for connection with the underframe (11).

3. A work table as claimed in claim 2, **characterized in that** the guide rail is provided with two undercut grooves (15, 16) which are disposed in the area of the upper and lower longitudinal edges of the guide rail (14).

4. A work table as claimed in claim 1, **characterized in that** the guide rail (14) is provided on the side averted from the work table (10) with two guide bridges (17, 18) for the rollers (19, 20) of the carriage (21), which guide bridges are disposed mutually parallel and at a distance from one another and extend in the longitudinal direction of the guide rail (14).

5. A work table as claimed in claim 1, **characterized in that** the carriage (21) is equipped with four rollers (19, 20) which describe a quadrangle and are held on the side of a support facing the guide rail (14).

6. A work table as claimed in claim 1 and 5, **characterized in that** the carriage (21) is formed substantially by a section of a profiled rail (24) and the rollers (19, 20) and that the profiled rail (24) is provided with two zones projecting in the direction towards the guide rail (14) in which the pins (22, 23) carrying the rollers are held.

7. A work table as claimed in claim 1, **characterized in that** the holding device (25) is provided with two lateral cheeks (27) which are disposed mutually parallel and at a distance from one another and are provided in the upper region associated with the carriage (21) for holding the equipment table (26) with two bores which are in true alignment.

8. A work table as claimed in claim 7, **characterized in that** the equipment table (26) is provided with two side parts (28) which are associated with the cheeks (27) of the holding device (25) and are provided with bores of the bearing corresponding to the bores of the cheeks (27), that at least one side part (28) of the equipment table (26) is provided in the opposite zone with an oblong hole (31) extending in a curved manner, and that the associated cheek (27) of the holding device (25) is provided with a positionally true bore (30) into which can be inserted a clamping element arresting the equipment table (26).

## Revendications

1. Table de travail comportant un plateau de table de grande surface et un piètement qui est constitué de préférence de barres profilées qui présentent des rainures détalonnées, **caractérisée par** un rail de guidage (14) qui est fixé en position verticale sur le côté de la table de travail (10), et qui est destiné à un chariot (21) comportant des galets de roulement (19, 20), ainsi que par une table à appareils (26) qui peut pivoter autour d'un axe horizontal (29) et qui est accouplée, au moyen d'un dispositif de maintien, au chariot (21) déplaçable le long du rail de guidage (14).

2. Table de travail selon la revendication 1, **caractérisée en ce que** le rail de guidage (14) présente au moins une rainure détalonnée (respectivement 15 et 16), sur le côté tourné vers la table de travail (10), pour la liaison avec le piètement (11).

3. Table de travail selon la revendication 2, **caractérisée en ce que** le rail de guidage est pourvu de deux rainures détalonnées (15, 16) qui se situent dans la zone supérieure et la zone inférieure des bords longitudinaux du rail de guidage (14).

4. Table de travail selon la revendication 1, **caractérisée en ce que** le rail de guidage (14) comporte, sur le côté tourné à l'opposé de la table de travail (10), deux nervures de guidage (17, 18) qui sont disposées à distance l'une de l'autre et s'étendent dans la direction longitudinale du rail de guidage (14), pour les galets de roulement (19, 20) du chariot (21).

5. Table de travail selon la revendication 1, **caractérisée en ce que** le chariot (21) est équipé de quatre galets de roulement (19, 20) qui décrivent un rectangle et qui sont montés sur le côté, tourné vers le rail de guidage (14), d'un support.

6. Table de travail selon les revendications 1 et 5, **caractérisée en ce que** le chariot (21) est essentiellement constitué d'une portion d'un rail profilé (24) et des galets de roulement (19, 20), et **en ce que** le rail profilé (24) présente deux zones, faisant saillie en direction du rail de guidage (14), dans lesquelles sont montés les axes (22, 23) qui supportent les galets de roulement (19, 20).

7. Table de travail selon la revendication 1, **caractérisée en ce que** le dispositif de maintien (25) comporte deux joues (27) latérales, parallèles et à distance l'une de l'autre, qui sont pourvues, dans la zone supérieure associée au chariot (21), de deux perçages alignés, pour supporter la table à appareils (26).

8. Table de travail selon la revendication 7, **caractérisée en ce que** la table à appareils (26) est pourvue de deux parties latérales (28), associées aux joues (27) du dispositif de maintien (25) et qui sont pourvues de perçages de palier qui correspondent aux perçages des joues (27), **en ce qu'**au moins une partie latérale (28) de la table à appareils (26) est pourvue, dans la zone opposée, d'un trou oblong (31) qui s'étend en arc, et **en ce que** la joue (27) associée du dispositif de maintien (25) est pourvue d'un perçage (30) en position correcte, dans lequel on peut insérer un élément de serrage qui bloque la table à appareils (26).
